# EUROPEAN PATENT SPECIFICATION

(11) **EP 1 549 128 B1**
(45) Date of publication and mention of the grant of the patent: **22.11.2006**
(21) Application number: 03748289.0
(22) Date of filing: 23.09.2003
(51) Int. Cl.: A01D 45/00

(54) **HARVESTING APPARATUS**
ERNTEVORRICHTUNG
APPAREIL DE CUEILLETTE

(30) Priority: 11.10.2002 GB 0223683
(43) Date of publication of application: 06.07.2005
(73) Proprietor: Haygrove Limited, Ledbury, Herefordshire HR8 2JL (GB)
(72) Inventor: CORBETT, Thomas, Robert, Westhope, Herefordshire HR4 8BU (GB)
(74) Representative: Bailey, Richard Alan
(86) International application number: PCT/GB2003/004069
(87) International publication number: WO 2004/032603

(56) References cited:
- DE-A- 3 151 719
- FR-A- 2 783 670
- US-A- 2 378 847
- US-A- 2 701 022
- US-A- 4 073 392
- US-A- 5 322 409
- US-A- 5 454 444

## Description

The present invention relates to harvesting apparatus for hand picking of field-grown produce and in particular, but not exclusively, to ground-level field-grown produce.

Harvesting apparatus on which a picker can sit or lie is known. The harvesting apparatus is moved along the rows of the field and the picker picks the produce as it is approached. The picked produce is placed in a suitable container for packing on a separate, independent machine or at a later date.

The problem with this type of apparatus is the irregularity of the produce. At some points along the rows, the produce may be sparse, while at other points there will be clusters. This entails the apparatus having to repeatedly adjust its speed or even stop and start.

A further problem then occurs when the apparatus is intended to support more than one picker to enable picking of produce from adjacent rows. In this case, it becomes increasingly problematic to adjust the speed of the harvesting apparatus to suit each picker.

Once the container in which the picked produce has been placed is full, the container must be emptied before further picking can take place. This entails halting the picking of the produce, which is undesirable.

A further disadvantage that has been recognised is the need for the full containers to be transferred to a separate packing station. Again, this results in wasted time and, as a consequence, is undesirable.

The present invention seeks to overcome these problems.

US 2378847, US 5454444 and US 4073392 all describe arrangements in which the position of a picker can be adjusted, US 4073392 describing the adjustment of the lateral piston of a picker whilst US 2378847 and US 5454444 relate to height adjustment. US 2378847 allows the picker's height to be adjusted whilst the apparatus is in use.

FR 2783670 describes an arrangement in which a picker drives his seat along a row of crop to be worked upon. The seat position is sensed and is used to drive a structure so that the picker is always located within the structure.

According to a first aspect of the present invention, there is provided a harvesting apparatus for use when manually harvesting field-grown produce, the harvesting apparatus having a support structure, a plurality of driven rotatable members by which the support structure can be moved, and a body support element supported by the support structure, the body support element being able to support a picker, and characterised in that the body support element is movable over an extended range relative to the support structure so that, when the harvesting apparatus is moving at a given speed in a first direction, the body support element can be selectively positioned relative to the support structure, to temporarily increase or decrease the speed of movement of the body support element.

Preferable and/or optional features ofthe first aspect ofthe present invention are set forth in Claims 2 to 15, inclusive.

According to a second aspect of the present invention, there is provided a method of manually hand-picking produce arranged in rows using harvesting apparatus as defined hereinbefore, the method comprising the steps of:
(a) a picker positioning him, or her,-self on a body support element of the harvesting apparatus;
(b) driving the harvesting apparatus along the rows ofthe produce at a constant or substantially constant speed; and
(c) the picker manually hand-picking the produce as it approaches, and selectively moving the body support element over the extended range to temporarily increase or decrease the speed of movement of the body support element and optimise the position of the picker relative to the occurrence of the produce, so that an increase in the amount of produce picked and an increase in the speed of movement of the harvesting apparatus can be obtained.

Preferable and/or optional features of the present invention are set forth in Claims 17 to 19, inclusive.

The present invention will now be described, by way of example, with reference to the accompanying drawings, in which:
Figure 1 is a schematic front elevational view of one embodiment of harvesting apparatus, in use, in accordance with the first aspect of the present invention;
Figure 2 is a schematic top plan view of the harvesting apparatus;
Figure 3 is a schematic side elevational view of the harvesting apparatus;
Figure 4 is a schematic perspective view of the harvesting apparatus; and
Figures 5 and 6 are views illustrating an alternative apparatus.

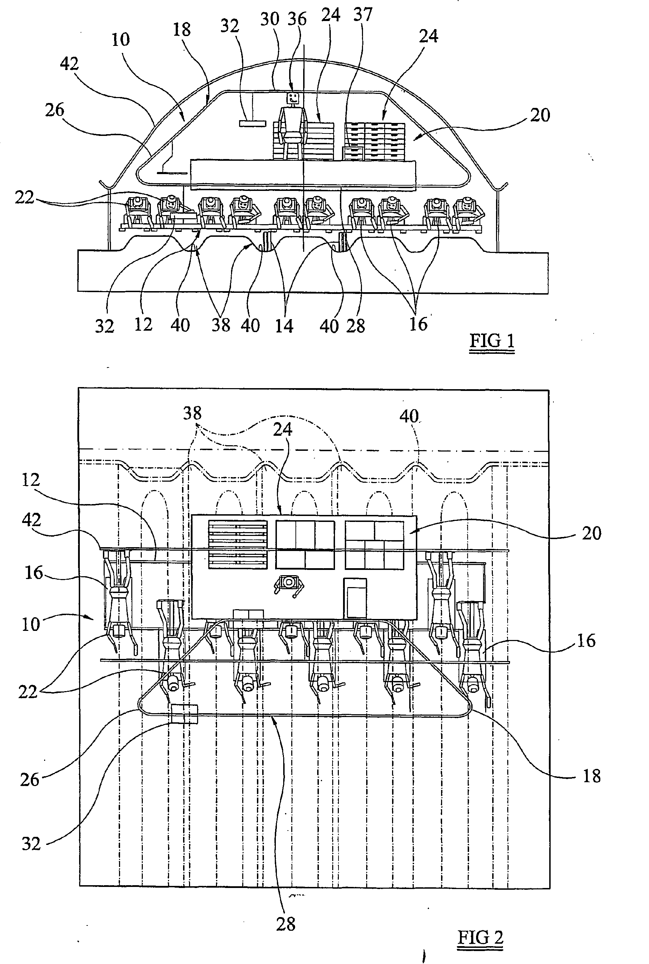

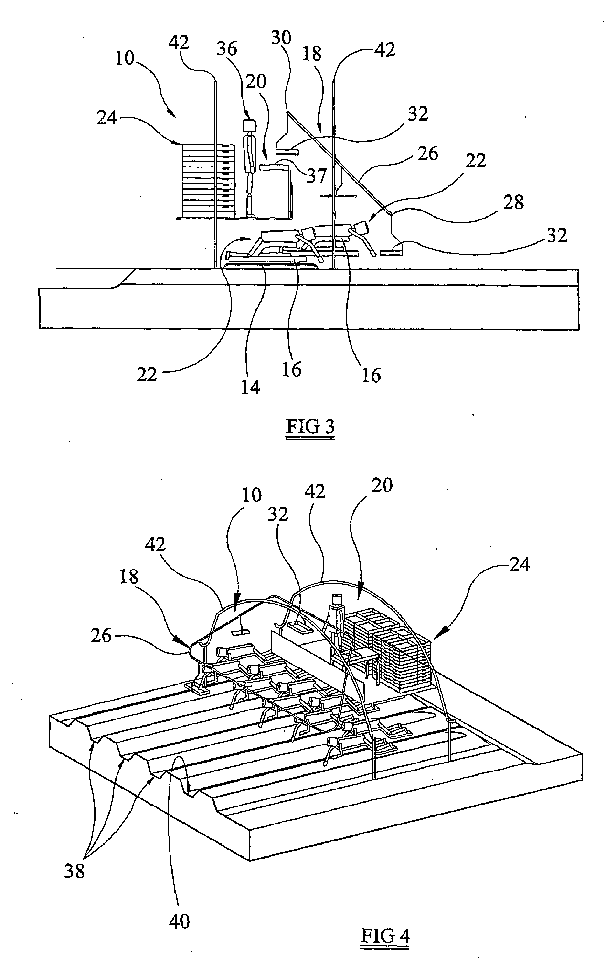

Referring to Figures 1 to 4 of the drawings, there is shown harvesting apparatus 10 having a support structure 12 (only shown in part), a plurality ofrotatable members 14, such as wheels or endless caterpillar tracks, mounted on a chassis of the support structure 12, mean (not shown) for driving the rotatable members 14, and a plurality of body support elements 16 supported by the support structure 12. A conveyor system 18 and a collection area 20 are also supported by the support structure 12.

The body support element 16 is an elongate padded bed or bench suitably formed to enable a first user 22 (herein referred to as a 'picker') to lie prone facedown thereon.

Each body support element 16 is mounted on a linear runner or pair of linear runners (not shown), fixedly supported on the support structure 12, so that the body support elements 16 are slidable relative to the support structure 12. There is thus an extended range of travel or movement, which is greater than that which would be achievable by simply flexing or bending the human body when in a prone position, from one end of the runner(s) to the other. The extended range of movement is in the order of 1 metre, but may be more.

Motorised means (not shown) are provided so that, by operation of a switch (not shown), each body support element 16 can be individually and selectively driven along its runner(s). The switch is typically a foot operated switch located at, or adjacent to, the rear of the body support element 16.

Each body support element 16 can be adjusted in a direction transverse to the longitudinal extent of the runner(s), so that the horizontal distance between adjacent body support elements 16 can be changed.

Each body support element 16 can also be adjusted vertically to alter the spacing between the respective body support element 16 and the ground.

The horizontal and vertical adjustments are effected via a motorised or manually-operated mechanism (neither of which is shown).

The collection area 20 is supported above the body support elements 16 and offset rearwardly relative thereto. The collection area 20 has space to accommodate a plurality of stacks of packing containers 24. The drive of the rotatable members 14 may also be controlled from the collection area 20.

The conveyor system 18 includes an endless rigid, or substantially rigid, conveyor track 26 mounted on the support structure 12, so that a first run 28 of the conveyor track 26 passes adjacent to the fronts of the body support elements 16 and a second run 30 passes through or adjacent to the collection area 20. Receiving members, typically in the form of trays 32, are suspended from the conveyor track 26 and are drivable around the conveyor track 26 through any conventional driving mechanism (not shown). The suspended height of each tray 32 is such that it travels along the first run 28 in or substantially in the horizontal plane of the body support elements 16, and adjacent to the fronts of the body support elements 16. The second run 30 of the conveyor track 26 is arranged so that the trays 32 travel at a height to enable convenient access thereto by a second user 36 (herein referred to as a 'packer').

In use, the harvesting apparatus 10 is manoeuvred into position adjacent to a first set of rows 38 having produce to be picked, so that the rotatable members 14 align or substantially align with the troughs 40 of the rows 38. Each picker 22 horizontally adjusts his, or her, allocated body support element 16 to correspond to their allocated row and the pitch of the rows. Each picker 22 also vertically adjusts the body support element 16 to take account of their body size and arm length.

Each picker 22 then lies facedown on the body support element 16.

The packer 36 starts and controls the harvesting apparatus 10, so that it preferably moves down the rows at a constant or substantially constant speed. The conveyor system 18 is also started.

Due to the movement of the harvesting apparatus 10, each picker 22 picks the produce in their row as it approaches. The picker 22 operates their sliding body support element 16, via their foot switch, to slide in a forwards or backwards direction relative to the support structure 12 of the harvesting apparatus 10. This has the effect of temporarily increasing or decreasing the speed of the picker 22 relative to the support structure 12, so that the picker 22 can optimise their position relative to the occurrence of the produce. Consequently, more produce can be reached, while a higher constant forward speed of the harvesting apparatus 10 can be maintained.

As the produce is picked, it is placed on a passing tray 32. The tray 32 passes around the conveyor track 26 to the collection area 20, where the produce is removed by the packer 36 and packed in one of the packing containers 24.

The collection area 20 includes a packing surface 37 which can be used for quality control of the picked produce, weighing the produce, and so forth.

When the harvesting apparatus 10 reaches the end of the first set of rows 38, it is manoeuvred into position adjacent a further set of rows (not shown) ready for the produce in these further rows to be picked.

Typically, the sets of rows are housed within individual growing tunnels (supporting ribs of which are referenced as 42 in the Figures), which provide an improved growing environment. In this case, the harvesting apparatus 10 is dimensioned to be able to move within the growing tunnel, and the number of body support elements 16 is a multiple of the number of rows housed therewithin.

Obviously, the speed of the harvesting apparatus can be altered as it is travelling along the rows, or the harvesting apparatus can indeed be halted at any point. The drive of the rotatable members could be controlled by a picker from the body support element, for example.

In a modification to the invention, the body support elements could be manually slidable as opposed to being motorised.

Furthermore, the harvesting apparatus could be adapted to accommodate only a single slidable body support element for a single picker.

The slidable body support element could also be adjustable to enable a picker to be selectively supported in a sitting position and a prone position.

Although the body support elements are slidable, they could be movable in any other suitable way, such as being swingable or pivotable, provided the extended range of movement, beyond that which is capable simply by flexation or bending of the human body when in a prone position, is permitted.

Although the harvesting apparatus is mainly intended for use with the manual hand-picking of ground-level field-grown produce, such as strawberries, it could be adapted for use with other types of field-grown produce requiring manual hand-picking.

The driving means may include feedback control for automatically adjusting the movement of the harvesting apparatus. For optimising the speed of movement, position sensors, or any other suitable alternative, can be included which determine the position of the body support elements and which output signals to control circuitry whereby the driving means determines the optimum speed of the harvesting apparatus which allows the body support elements to remain as close to the centre of their respective runners as possible. Consequently, body support elements will not often be at the limits of their runners.

Further sensors can be used to sense the gaps in between rows of produce and to output signals by which the driving means can automatically steer the harvesting apparatus. This allows pickers and packers to concentrate on the picking and packing of the produce, respectively.

The pickers may have one or more individual punnet containers carried in one hand, or removably supported by a holder (not shown) fixed to the body support element. Once the punnet container is suitably full, it can be placed on a passing tray for transportation to the collection area. Empty punnet containers are then placed on the passing trays for transportation back to the pickers.

The packing surface of the collection area can thus be used for putting lids on the punnet containers and/or labelling the punnet containers prior to packing.

Also, a GPS-type monitoring system may be provided as part of the harvesting apparatus. This will enable monitoring and recordal of an amount of produce picked, and consequently enable predictive forecasting of expected future produce amounts. For example, the packer at the collection area is provided with a GPS transmitting device. When a predetermined number of packing containers are filled, notification is sent via the GPS device. The resultant amount of produce between consecutive notifications can then be determined based on the distance travelled by the harvesting apparatus. Alternatively, each body support element may be provided with a switch which operates each time a load of produce, for example a punnet container, is moved onto the conveyor system. Yields from every row can thus be monitored.

The harvesting apparatus is intended to be a single independent unit based around a unitary support structure. However, the harvesting apparatus could be split into units which are interconnected and/or bridged, for example a body support element unit and a collection area unit interconnected or bridged via the conveyor system.

By the provision of the body support elements with extended range of movement, it is thus possible to provide harvesting apparatus which can be driven along rows of produce at relative high speed while the position of the or each body support element, relative to the support structure of the harvesting apparatus, can be optimised based on the occurrence of produce to be picked.

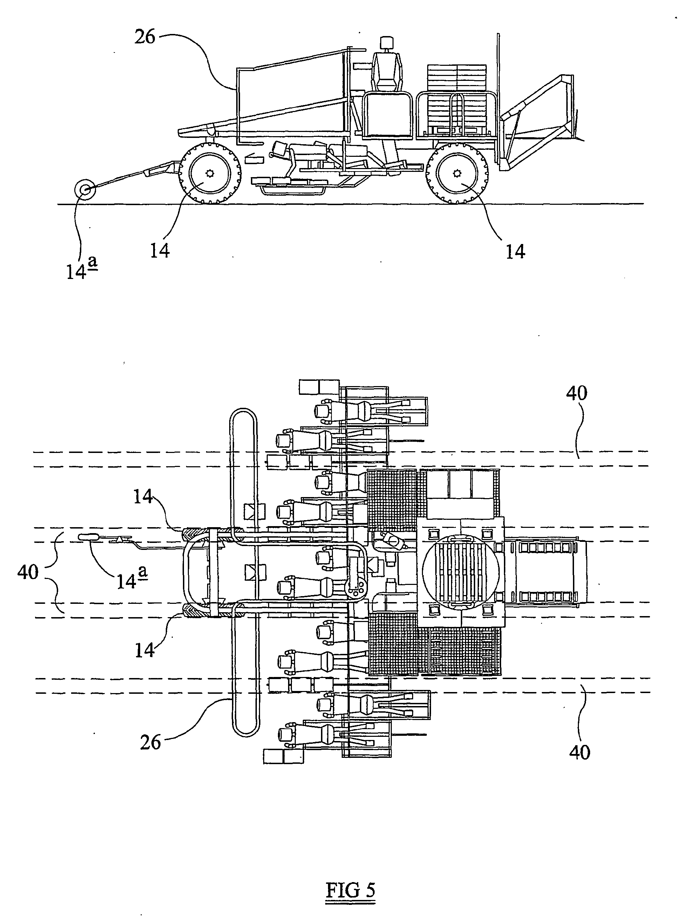

The configuration of the harvesting apparatus need not be as described hereinbefore. Figures 5 and 6 illustrate an alternative configuration in which the location of the area in which the packer works has been changed slightly, the route followed by the conveyor 26 is altered, and the apparatus is supported on four wheels 14, rather than tracks as may be the case in the arrangement shown in Figures 1 to 4. An additional wheel 14a extends forwardly of the apparatus, the wheel riding along one of the troughs 40 and serving to assist in steering of the apparatus, leaving the packer free to attend to packing of the picked crop rather than having to concentrate on steering the apparatus.

The embodiments described above are given by way of example only, and modifications will be apparent to persons skilled in the art without departing from the scope of the invention as defined by the appended claims. For example, the vertical adjustment of the body support element could be dispensed with; and the body support element could be movable over an extended range in more than one direction.

## Claims

1. Harvesting apparatus for use when manually harvesting field-grown produce, the harvesting apparatus having a support structure (12), a plurality of driven rotatable members (14) by which the support structure (12) can be moved, and a body support element (16) supported by the support structure (12), the body support element (16) being able to support a picker, and **characterised in that** the body support element (16) is movable over an extended range relative to the support structure (12) so that, when the harvesting apparatus is moving at a given speed in a first direction, the body support element (16) can be selectively positioned relative to the support structure (12), to temporarily increase or decrease the speed of movement of the body support element (16).

2. Harvesting apparatus as claimed in Claim 1, wherein a plurality of the movable body support elements (16) is provided.

3. Harvesting apparatus as claimed in any one of the preceding claims, wherein the extended range of movement is in the order of 1 metre or more.

4. Harvesting apparatus as claimed in any one ofthe preceding claims, wherein the or each body support element (16) includes motorised means for adjusting the position of the body support element (16) relative to the support structure (12).

5. Harvesting apparatus as claimed in any one of Claims 1 to 3, wherein the or each body support element (16) is manually movable.

6. Harvesting apparatus as claimed in any one of the preceding claims, wherein the or each body support element (16) is slidable along a linear runner or pair of linear runners fixedly supported on the support structure.

7. Harvesting apparatus as claimed in any one of the preceding claims, wherein the or each body support element (16) is vertically adjustable relative to the support structure (12) to suit an individual picker.

8. Harvesting apparatus as claimed in any one ofthe preceding claims, wherein the or each body support element (16) is adjustable in a transverse direction.

9. Harvesting apparatus as claimed in any one of the preceding claims, wherein the or each body support element (16) is adapted to enable the respective picker to lie prone thereon.

10. Harvesting apparatus as claimed in any one of the preceding claims, further comprising a conveyor system (18) and a collection area (20), the conveyor system (18) transporting produce placed thereon by the picker to the collection area (20) for packing.

11. Harvesting apparatus as claimed in Claim 10, wherein the conveyor system (18) includes an endless rigid track which is supported by the support structure (12) and from which receiving members are suspended.

12. Harvesting apparatus as claimed in Claim 10 or Claim 11, wherein the collection area (20) is supported by the support structure (12).

13. Harvesting apparatus as claimed in any one of the preceding claims, further comprising means for optimising the speed of the driven rotatable members (14) based on the position ofthe or each body support element (16) relative to the support structure (12).

14. Harvesting apparatus as claimed in Claim 13, wherein the speed optimisation means includes one or more position sensors which monitor the position of the or each body support element (16).

15. Harvesting apparatus as claimed in any one of the preceding claims, further comprising one or more sensors through which the direction of movement of the harvesting apparatus can be automatically adjusted.

16. Method of manually hand-picking produce arranged in rows using harvesting apparatus as claimed in any one of the present claims, the method comprising the steps of:
(a) a picker positioning him, or her,-self on a body support element (16) ofthe harvesting apparatus;
(b) driving the harvesting apparatus along the rows of the produce at a constant or substantially constant speed; and
(c) the picker manually hand-picking the produce as it approaches, and selectively moving the body support element (16) over the extended range to temporarily increase or decrease the speed of movement of the body support element (16) and optimise the position of the picker relative to the occurrence of the produce, so that an increase in the amount of produce picked and an increase in the speed of movement of the harvesting apparatus can be obtained.

17. A method as claimed in Claim 16 when dependent on Claim 7 or Claim 8, further comprising a step (d), prior to step (a), of adjusting the relative vertical and/or transverse position(s) of the body support element (16) to suit the picker.

18. A method as claimed in Claim 16, when dependent on any one of Claims 10 to 12, or Claim 17, further comprising a step (e), subsequent to step (c), of placing the picked produce on the conveyor system (18).

19. A method as claimed in Claim 18, further comprising a step (f), subsequent to step (e), of a packer at the collection area (20) removing the picked produce from the conveyor system (18) and packing the picked produce.

## Patentansprüche

1. Erntevorrichtung für eine Verwendung, wenn ein Feldprodukt manuell geerntet wird, wobei die Erntevorrichtung aufweist: eine Tragekonstruktion (12); eine Vielzahl von angetriebenen drehbaren Elementen (14), mittels der die Tragekonstruktion (12) bewegt werden kann; und ein Körpertragelement (16), das von der Tragekonstruktion (12) gehalten wird, wobei das Körpertragelement (16) in der Lage ist, einen Pflücker zu tragen, und **dadurch gekennzeichnet, dass** das Körpertragelement (16) über einen erweiterten Bereich relativ zur Tragekonstruktion (12) beweglich ist, so dass, wenn sich die Erntevorrichtung mit einer bestimmten Geschwindigkeit in einer ersten Richtung bewegt, das Körpertragelement (16) relativ zur Tragekonstruktion (12) selektiv positioniert werden kann, um vorübergehend die Geschwindigkeit der Bewegung des Körpertragelementes (16) zu erhöhen oder zu verringern.

2. Erntevorrichtung nach Anspruch 1, bei der eine Vielzahl von beweglichen Körpertragelementen (16) vorhanden ist.

3. Erntevorrichtung nach einem der vorhergehenden Ansprüche, bei der der erweiterte Bewegungsbereich in der Größenordnung von 1 Meter oder mehr liegt.

4. Erntevorrichtung nach einem der vorhergehenden Ansprüche, bei der das oder jedes Körpertragelement (16) eine Motoreinrichtung für das Einstellen der Position des Körpertragelementes (16) relativ zur Tragekonstruktion (12) umfasst.

5. Erntevorrichtung nach einem der Ansprüche 1 bis 3, bei der das oder jedes Körpertragelement (16) manuell beweglich ist.

6. Erntevorrichtung nach einem der vorhergehenden Ansprüche, bei der das oder jedes Körpertragelement (16) längs eines linearen Holmes oder eines Paares von linearen Holmen verschiebbar ist, der an der Tragekonstruktion stationär gehalten wird.

7. Erntevorrichtung nach einem der vorhergehenden Ansprüche, bei der das oder jedes Körpertragelement (16) relativ zur Tragekonstruktion (12) vertikal verstellbar ist, um sich an einen einzelnen Pflücker anzupassen.

8. Erntevorrichtung nach einem der vorhergehenden Ansprüche, bei der das oder jedes Körpertragelement (16) in der Querrichtung verstellbar ist.

9. Erntevorrichtung nach einem der vorhergehenden Ansprüche, bei der das oder jedes Körpertragelement (16) so angepasst ist, dass der jeweilige Pflücker darauf mit dem Gesicht nach unten liegen kann.

10. Erntevorrichtung nach einem der vorhergehenden Ansprüche, die außerdem eine Förderanlage (18) und einen Sammelbereich (20) aufweist, wobei die Förderanlage (18) das darauf vom Pflücker angeordnete Produkt zum Sammelbereich (20) für das Verpacken transportiert.

11. Erntevorrichtung nach Anspruch 10, bei der die Förderanlage (18) eine endlose starre Laufbahn umfasst, die von der Tragekonstruktion (12) getragen wird, und von der Aufnahmeelemente herabhängen.

12. Erntevorrichtung nach Anspruch 10 oder Anspruch 11, bei der der Sammelbereich (20) von der Tragekonstruktion (12) getragen wird.

13. Erntevorrichtung nach einem der vorhergehenden Ansprüche, die außerdem eine Einrichtung für das Optimieren der Geschwindigkeit der angetriebenen drehbaren Elemente (14) auf der Basis der Position des oder jedes Körpertragelementes (16) relativ zur Tragekonstruktion (12) aufweist.

14. Erntevorrichtung nach Anspruch 13, bei der die Geschwindigkeitsoptimierungseinrichtung einen oder mehrere Positionssensoren umfasst, die die Position des oder eines jeden Körpernagelementes (16) überwachen.

15. Erntevorrichtung nach einem der vorhergehenden Ansprüche, die außerdem einen oder mehrere Sensoren aufweist, mittels der die Bewegungsrichtung der Erntevorrichtung automatisch eingestellt werden kann.

16. Verfahren für das manuelle Ernten eines Produktes, das in Reihen angeordnet ist, wobei eine Erntevorrichtung nach einem der vorliegenden Ansprüche eingesetzt wird, wobei das Verfahren die folgenden Schritte aufweist:
(a) Positionieren eines Pflückers selbst auf einem Körpertragelement (16) der Erntevorrichtung;
(b) Antreiben der Erntevorrichtung längs der Reihen des Produktes mit einer konstanten oder im Wesentlichen konstanten Geschwindigkeit; und
(c) manuelles Ernten des Produktes durch den Pflücker, während er sich nähert, und selektives Bewegen des Körpertragelementes (16) über den erweiterten Bereich, um vorübergehend die Geschwindigkeit der Bewegung des Körpertragelementes (16) zu erhöhen oder zu verringern, und um die Position des Pflückers relativ zum Vorkommen des Produktes zu optimieren, so dass eine Steigerung der geernteten Produktmenge und eine Erhöhung der Geschwindigkeit der Bewegung der Erntevorrichtung erhalten werden können.

17. Verfahren nach Anspruch 16, wenn er vom Anspruch 7 oder Anspruch 8 abhängig ist, das außerdem einen Schritt (d), vor dem Schritt (a), des Einstellens der relativen vertikalen und/oder Querposition(en) des Körpertragelementes (16) aufweist, um sich an den Pflücker anzupassen.

18. Verfahren nach Anspruch 16, wenn er von einem der Ansprüche 10 bis 12 oder Anspruch 17 abhängig ist, das außerdem einen Schritt (e), anschließend an den Schritt (c), des Anordnens des geemteten Produktes auf der Förderanlage (18) aufweist.

19. Verfahren nach Anspruch 18, das außerdem einen Schritt (f), anschließend an den Schritt (e), aufweist, bei dem eine Verpackungsmaschine im Sammelbereich (20) das geerntete Produkt von der Förderanlage (18) entfernt und das geerntete Produkt verpackt.

## Revendications

1. Dispositif de cueillette destiné à être utilisé pour la cueillette manuelle de produits cultivés en plein champ, le dispositif de cueillette comportant une structure de support (12), plusieurs éléments rotatifs entraînés (14) permettant de déplacer la structure de support (12), et un élément de support du corps (16) supporté par la structure de support (12), l'élément de support du corps (16) pouvant supporter un cueilleur, et **caractérisé en ce que** l'élément de support du corps (16) peut être déplacé au-delà d'une distance d'extension par rapport à la structure de support (12), de sorte que lors du déplacement du dispositif de cueillette dans une première direction, l'élément de support du corps (16) peut être positionné de manière sélective par rapport à la structure de support (12), pour accroître ou réduire temporairement la vitesse de déplacement de l'élément de support du corps (16).

2. Dispositif de cueillette selon la revendication 1, comportant plusieurs éléments mobiles de support du corps (16).

3. Dispositif de cueillette selon l'une quelconque des revendications précédentes, dans lequel la distance d'extension du déplacement est de l'ordre de 1 mètre ou plus.

4. Dispositif de cueillette selon l'une quelconque des revendications précédentes, dans lequel le ou chaque élément de support du corps (16) englobe un moyen motorisé pour ajuster la position de l'élément de support du corps (16) par rapport à la structure de support (12).

5. Dispositif de cueillette selon l'une quelconque des revendications 1 à 3, dans lequel le ou chaque élément de support (16) peut être déplacé manuellement.

6. Dispositif de cueillette selon l'une quelconque des revendications précédentes, dans lequel le ou chaque élément de support du corps (16) peut glisser le long d'un galet de roulement linéaire ou d'une paire de galets de roulement linéaires supportés fermement sur la structure de support.

7. Dispositif de cueillette selon l'une quelconque des revendications précédentes, dans lequel le ou chaque élément de support du corps (16) peut être ajusté verticalement par rapport à la structure de support (12) en vue de l'adaptation à un cueilleur individuel.

8. Dispositif de cueillette selon l'une quelconque des revendications précédentes, dans lequel le ou chaque élément de support du corps (16) peut être ajusté dans une direction transversale.

9. Dispositif de cueillette selon l'une quelconque des revendications précédentes, dans lequel le ou chaque élément de support du corps (16) est destiné à permettre une position couchée sur le ventre du cueilleur correspondant.

10. Dispositif de cueillette selon l'une quelconque des revendications précédentes, comprenant en outre un système de transport (18) et une zone de collecte (20), le système de transport (18) transportant les produits qui y sont placés par le cueilleur vers la zone de collecte (20) en vue de leur emballage.

11. Dispositif de cueillette selon la revendication 10, dans lequel le système de transport (18) englobe une piste rigide sans fin supportée par la structure de support (12) et sur laquelle sont suspendus des éléments de réception.

12. Dispositif de cueillette selon les revendications 10 ou 11, dans lequel la zone de collecte (20) est supportée par la structure de support (12).

13. Dispositif de cueillette selon l'une quelconque des revendications précédentes, comprenant en outre un moyen pour optimiser la vitesse des éléments rotatifs entraînés (14) sur la base de la position du ou de chaque élément de support du corps (16) par rapport à la structure de support (12).

14. Dispositif de cueillette selon la revendication 13, dans lequel le moyen d'optimisation de la vitesse englobe un ou plusieurs capteurs de position surveillant la position du ou de chaque élément de support du corps (16).

15. Dispositif de cueillette selon l'une quelconque des revendications précédentes, comprenant en outre un ou plusieurs capteurs permettant d'ajuster automatiquement la direction de déplacement du dispositif de cueillette.

16. Procédé de cueillette manuelle de produits agencés dans des rangées par l'intermédiaire du dispositif de cueillette selon l'une quelconque des revendications précédentes, le procédé comprenant les étapes ci-dessous:
(a) positionnement d'un cueilleur sur un élément de support du corps (16) du dispositif de cueillette;
(b) entraînement du dispositif de cueillette le long des rangées de produits à une vitesse constante ou pratiquement constante; et
(c) cueillette manuelle par le cueilleur des produits lors de leur approche, et déplacement sélectif de l'élément de support du corps (16) au-delà de la distance d'extension pour accroître ou réduire temporairement la vitesse de déplacement de l'élément de support du corps (16) et pour optimiser la position du cueilleur par rapport à l'apparition du produit, permettant d'assurer ainsi un accroissement de la quantité de produits cueillis et un accroissement de la vitesse de déplacement du dispositif de cueillette.

17. Procédé selon la revendication 16, dépendant des revendications 7 ou 8, comprenant en outre une étape (d), avant l'étape (a), consistant à ajuster la (les) position(s) verticale et/ou transversale relative(s) de l'élément de support du corps (16) en vue de l'adaptation au cueilleur.

18. Procédé selon la revendication 16, dépendant de l'une quelconque des revendications 10 à 12 ou de la revendication 17, comprenant en outre un étape (e), après l'étape (c), consistant à placer les produits cueillis sur le système de transport (18).

19. Procédé selon la revendication 18, comprenant en outre une étape (f), après l'étape (e), au cours de laquelle un responsable de l'emballage au niveau de la zone de collecte (20) retire les produits cueillis du système de transport (18) et emballe les produits cueillis.
